# EUROPEAN PATENT APPLICATION

(11) **EP 4 834 475 A1**
(43) Date of publication of application: **04.11.2026**
(21) Application number: 24913744.9
(22) Date of filing: 30.12.2024
(51) Int. Cl.: B01L 3/00, B01F 33/30, B29C 65/48, B01F 101/22, B01F 101/23

(54) **MICROFLUIDIC CHIP FOR GENERATING VARIOUS TYPES OF FLOWS AND MANUFACTURING METHOD THEREOF**

(30) Priority: 31.12.2023 KR 20230198074; 31.12.2023 KR 20230198082
(71) Applicant: Enparticle Co., Ltd., Busan 46241 (KR)
(72) Inventor: CHO, Hyo Chang, Busan 48415 (KR); KIM, Sung Hoon, Busan 48053 (KR); PARK, Dong Hyeok, Busan 46288 (KR); JEONG, Bok Kyo, Busan 46232 (KR)
(74) Representative: Klöckner, Christoph
(86) International application number: PCT/KR2024/021446
(87) International publication number: WO 2025/143940

(57) **Abstract**

The present invention relates to a microfluidic chip comprising: an injection unit; a recovery unit; and a mixing unit including a mixing channel connecting the injection unit and the recovery unit. Specifically, the present invention relates to a microfluidic chip capable of more efficiently mixing two or more reagents in a mixing unit having a short length by generating various types of flows in the mixing unit, and a manufacturing method thereof.

## Description

### [Technical Field]

The present invention relates to a microfluidic chip comprising: an injection unit; a recovery unit; and a mixing unit including a mixing channel connecting the injection unit and the recovery unit. Specifically, the present invention relates to a microfluidic chip capable of more efficiently mixing two or more reagents in a mixing unit having a short length by generating various types of flows in the mixing unit, and a manufacturing method thereof.

### [Background Art]

Microfluidics technology is a fundamental and core technology that serves as the basis for the commercialization of Micro-Total Analysis Systems (µ-TAS) and Lab-on-a-Chip. It is a microfluidic control technology that uniformly mixes substances by inducing instantaneous natural diffusion reactions within 0.001 to 0.1 seconds in an extremely small space.

Microfluidics technology can be applied to various fields such as medicine, biotechnology, and the environment. In particular, it is receiving significant attention in fields such as high-purity pharmaceutical synthesis and the manufacturing of mRNA vaccines for the recently emerged COVID-19. It is expected to be further applied to gene- and cell-based antivirals, anticancer vaccines, and personalized precision medicine in the future.

As a specific example, research is actively being conducted on manufacturing and analyzing lipid nanoparticles (LNP) or liposomes by supplying reagents to a lab-on-a-chip or a micro-total analysis system. The process of manufacturing the lipid nanoparticles (LNP) or liposomes includes a step of mixing two or more reagents.

The microfluidic chip includes a mixing unit for mixing two or more reagents. While a channel for mixing reagents is formed in the mixing unit of the microfluidic chip, the size of the channel for mixing reagents is so small that it has a low Reynolds number, causing the reagents to flow as a laminar flow within the channel.

Unlike turbulent flow, laminar flow degrades mixing performance; thus, even if the direction of the flows is repeatedly changed within a micro-mixing channel, there is a problem in that the reagents are not mixed well. Therefore, to solve this problem, the length of the micro-mixing channel must be increased.

However, if the length of the micro-mixing channel increases, it becomes difficult to quickly recover the target mixed reagents, and there is a further problem in that the amount of reagent remaining in the micro-mixing channel that cannot be recovered increases.

Accordingly, the present inventors have developed a microfluidic chip capable of rapidly recovering mixed reagents, thereby solving the problems associated with conventional microfluidic chips.

### [Prior Art Documents]

### [Patent Document]

(Patent Document 0001) Korean Laid-Open Patent Publication No. 10-2019-0043725 (A)

### [Summary of Invention]

### [Technical Problem]

An object of the present invention is to provide a microfluidic chip comprising: an injection unit (100); a recovery unit (400); and a mixing unit (200) including a mixing channel (300) connecting the injection unit (100) and the recovery unit (400).

Specifically, an object of the present invention is to provide a microfluidic chip having a structure in which: the mixing channel (300) includes an inlet channel (310), a composite mixing unit (320), and a recovery channel (350); the composite mixing unit (320) includes a first channel (321), a second channel (323), and a third channel (325); the third channel connects the first channel and the second channel (323); a longitudinal direction of the first channel and a longitudinal direction of the third channel are not parallel to each other; the longitudinal direction of the third channel and a longitudinal direction of the second channel are not parallel to each other; and the first channel includes a first pillar, and the second channel includes a second pillar.

### [Technical Solution]

The present invention relates to a microfluidic chip comprising: an injection unit (100); a recovery unit (400); and a mixing unit (200) including a mixing channel (300) connecting the injection unit (100) and the recovery unit (400),
wherein the mixing channel (300) includes an inlet channel (310), a composite mixing unit (320), and a recovery channel (350),
wherein the composite mixing unit (320) includes a first channel (321); a second channel (323); and a third channel (325),
wherein the third channel connects the first channel and the second channel (323),
wherein a longitudinal direction of the first channel and a longitudinal direction of the third channel are not parallel to each other, and the longitudinal direction of the third channel and a longitudinal direction of the second channel are not parallel to each other, and
wherein the first channel includes a first pillar, and the second channel includes a second pillar.

In the microfluidic chip of the present invention, the inlet channel includes a mixed reagent transport channel (313), the mixed reagent transport channel is connected to the first channel, and a longitudinal direction of the mixed reagent transport channel and the longitudinal direction of the first channel may not be parallel to each other.

In the microfluidic chip of the present invention, the longitudinal direction of the first channel and the longitudinal direction of the third channel may be perpendicular to each other.

In the microfluidic chip of the present invention, the longitudinal direction of the third channel and the longitudinal direction of the second channel may be perpendicular to each other.

In the microfluidic chip of the present invention, the longitudinal direction of the mixed reagent transport channel and the longitudinal direction of the first channel may be perpendicular to each other.

In the microfluidic chip of the present invention, the first channel and the second channel may be disposed to face each other.

In the microfluidic chip of the present invention, a flow cross-sectional area of the third channel may be smaller than each of flow cross-sectional areas of the first channel and the second channel.

In the microfluidic chip of the present invention, the flow cross-sectional area of the mixed reagent transport channel may be smaller than the flow cross-sectional area of the first channel.

In the microfluidic chip of the present invention, the first channel or the second channel may have a length (L1) greater than a width (W1).

In the microfluidic chip of the present invention, the first pillar or the second pillar may be provided in plurality along the longitudinal direction of the first channel or the second channel.

In the microfluidic chip of the present invention, the composite mixing unit may be provided in plurality, and the plurality of composite mixing units are arranged in series, but is not limited thereto. For example, they may be arranged diagonally.

In the microfluidic chip of the present invention, adjacent composite mixing units may be connected to each other through a fourth channel (330).

In the microfluidic chip of the present invention, a flow cross-sectional area of the fourth channel may be smaller than each of the flow cross-sectional areas of the first channel and the second channel.

In the microfluidic chip of the present invention, a last composite mixing unit among the plurality of composite mixing units may be connected to the recovery unit (400) through a recovery channel (350).

In the microfluidic chip of the present invention, the first channel, the third channel, and the second channel may have a "⁻" shape, but are not limited thereto.

In the microfluidic chip of the present invention, the injection unit includes a first injection chamber (111) and a second injection chamber (112) capable of respectively injecting different reagents, and the first injection chamber and the second injection chamber may be connected to a first injection resistance channel (113) and a second injection resistance channel (114), respectively.

In the microfluidic chip of the present invention, an injection chamber and an injection resistance channel may be further included.

In the microfluidic chip of the present invention, the recovery unit may include a recovery chamber (411) and a discharge chamber (412).

In the microfluidic chip of the present invention, the recovery chamber and the discharge chamber may be connected to a recovery resistance channel (413) and a discharge resistance channel (414), respectively.

The present invention relates to a method of manufacturing a microfluidic chip comprising: an injection unit (100); a recovery unit (400); and a mixing unit (200) including a mixing channel (300) connecting the injection unit (100) and the recovery unit (400), the method comprising:
a) a component manufacturing step of manufacturing the injection unit, the mixing unit, and the recovery unit using separate molds, respectively;
b) an alignment step of aligning the injection unit and the recovery unit at coupling positions on the mixing unit; and
c) a coupling step of coupling the injection unit and the recovery unit aligned on the mixing unit by applying pressure.

### [Advantageous Effects of Invention]

The microfluidic chip of the present invention has a mixing channel (300) formed in a mixing unit (200), wherein the mixing channel includes a composite mixing unit (320) having a structure in which a first channel (321), a third channel (325), and a second channel (323) are sequentially connected to form a " 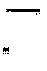 " shape, and the first channel and the second channel include one or more first pillars and second pillars (322, 324), respectively.

Accordingly, the structure of the microfluidic chip of the present invention generates flows such as redirection, expansion, contraction, branching, and merging when two or more different reagents pass through the mixing channel, thereby enabling more effective mixing of the reagents. The microfluidic chip of the present invention has an advantage in that two or more different reagents injected into the composite mixing unit formed in the mixing unit can be mixed more efficiently over a short mixing length.

In addition, the microfluidic chip of the present invention has an advantage of being easily manufacturable because the mixing channel including the composite mixing unit is formed in a simple structure at the lower portion of a mixing unit substrate (210), and a required mixing channel (300) can be configured by adding a plurality of the composite mixing units (320) in series if necessary.

The microfluidic chip of the present invention can configure the channel resistance to be the same through the injection resistance channels (113, 114). Therefore, physical properties of the fluid injected into the plurality of inlets may vary depending on the substances injected into the micro-channels; in such a case, by making the resistance of the injection resistance channels equal, variables caused by different injection resistances can be reduced. Furthermore, if the resistance of the injection resistance channel is higher than the resistance of the mixing unit, it has the effect of preventing backflow and bubbling when the injection ratios between fluids differ or when one fluid enters the channel first.

The channels of the microfluidic chip according to the present invention, particularly the channels formed in the mixing channel (300), have an advantage in that the total processing width of the channel pattern is kept uniform while the depth is processed deeply to allow for a high aspect ratio of depth to width of approximately 4. This enhances processability and significantly reduces the defect rate during injection molding, while maximizing mixing efficiency through an anisotropic mechanism of contraction, branching, and expansion based on the channel structure.

The effects of the present invention are not limited to the aforementioned effects, and should be understood to include all effects inferable from the configuration of the invention described in the detailed description or the claims of the present invention.

### [Brief Description of Drawings]

FIG. 1 is a perspective view of one embodiment of a microfluidic chip according to the present invention.
FIG. 2a is an exploded view of one embodiment of a microfluidic chip according to the present invention, showing a configuration including an injection unit and a recovery unit on an upper plate, and a mixing unit on a lower plate.
FIG. 2b is an exploded view of one embodiment of a microfluidic chip according to the present invention, showing a configuration including all of the injection unit, the mixing unit, and the recovery unit on the upper plate.
FIG. 3 is a plan view of a mixing unit (200) formed in the microfluidic chip of the present invention.
FIG. 4 is an exemplary view showing flows occurring in the mixing channel (300) of the mixing unit (200) of the present invention and changes in flow cross-sectional areas.
FIG. 5 is a simulation diagram of reagent mixing in the mixing unit of the microfluidic chip according to the present invention.
FIG. 6 is a photograph of one embodiment of a microfluidic chip according to the present invention.

### [Best Mode for Carrying Out the Invention]

Hereinafter, the present invention will be described with reference to the accompanying drawings. However, the present invention may be implemented in various different forms and, therefore, is not limited to the embodiments described herein.

Throughout the specification, when a part is said to be "connected (accessed, contacted, coupled)" to another part, this includes not only cases of being "directly connected" but also cases of being "indirectly connected" with another member interposed therebetween. In addition, when a part "includes" a certain component, this means that it may further include other components rather than excluding other components, unless specifically stated otherwise.

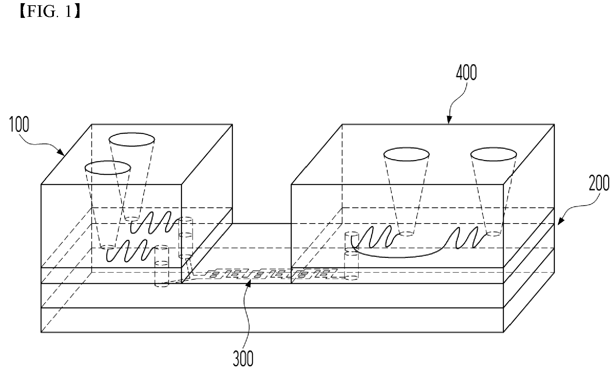

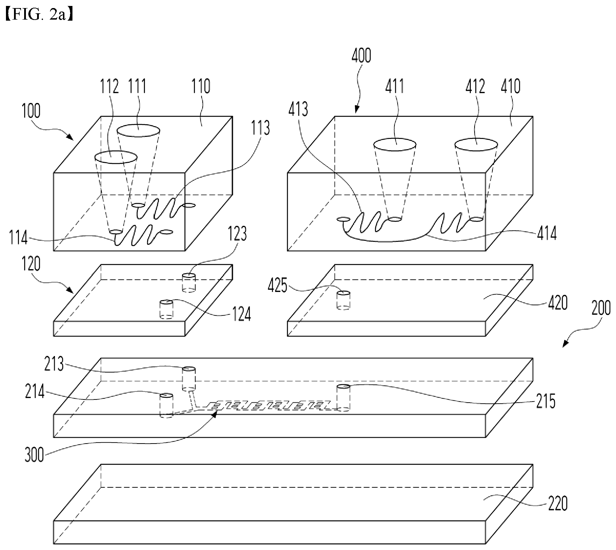

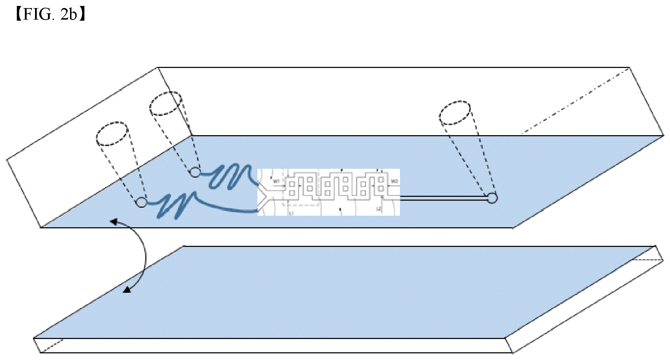

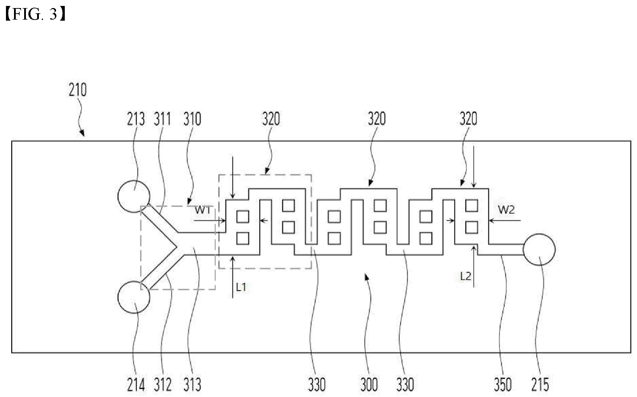

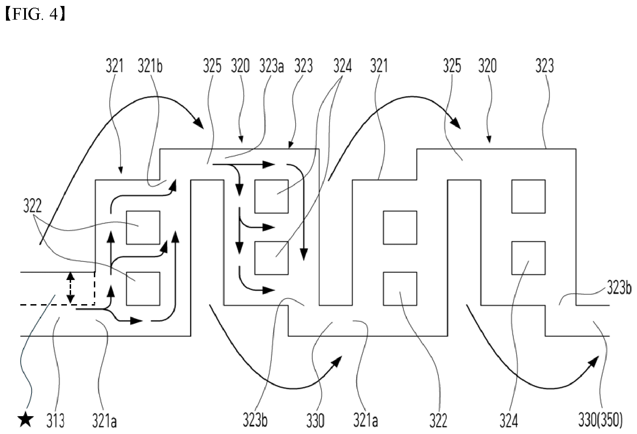

FIG. 1 is a perspective view of one embodiment of a microfluidic chip according to the present invention, FIGS. 2a and 2b are exploded views of one embodiment of a microfluidic chip according to the present invention, FIG. 3 is a plan view of a mixing channel (300) formed in a mixing unit (200) of a microfluidic chip according to the present invention, and FIG. 4 is an exemplary view showing flows occurring in the mixing unit (200) of the microfluidic chip according to the present invention.

The microfluidic chip of the present invention includes an injection unit (100); a mixing unit (200); and a recovery unit (400), as shown in FIGS. 1 and 2.

The injection unit (100) includes first and second injection chambers (111, 112) capable of respectively injecting two different reagents. In this case, if it is necessary to mix three or more reagents, third and fourth injection chambers (not shown) or the like may be further included.

The first and second injection chambers (111, 112) may be connected to first and second injection resistance channels (113, 114) respectively providing resistance for adjusting pressure heads, if necessary. To allow the first and second injection chambers (111, 112) to be coupled to the mixing unit (200), the injection unit (100) may include an injection unit body (110).

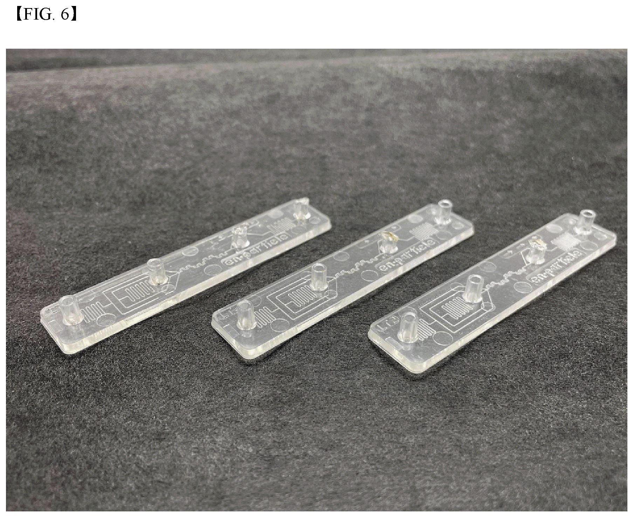

The first and second injection resistance channels (113, 114) may be formed at a lower portion of the injection unit body (110), but are not limited thereto. In the case of a microfluidic chip that does not include the injection unit body (110), the first and second injection resistance channels (113, 114) may be formed in the mixing unit (200), which will be described later. The first and second injection resistance channels (113, 114) allow the resistance of the channels to be designed to be identical or appropriately adjusted according to the physical properties of a plurality of fluids injected into the micro-channels, considering that there may be differences in the physical properties of the fluids. FIG. 6 shows an embodiment of a microfluidic chip designed such that the resistances of the first and second injection resistance channels (113, 114) are identical.

The injection unit body (110) may directly contact an upper surface of the mixing unit (200). An injection unit auxiliary substrate (120) may be formed at the lower portion of the injection unit body (110) to prevent the first and second injection chambers (111, 112) and the first and second injection resistance channels (113, 114) from being exposed.

At this time, since the injection unit auxiliary substrate (120) is installed on the upper portion of the mixing unit (200), first and second injection communication holes (123, 124) respectively connecting the first and second injection chambers (111, 112) and the mixing channel (300) formed in the mixing unit (200) may be formed in the injection unit auxiliary substrate (120).

Two or more different reagents supplied to the injection unit (100) are mixed in the mixing unit (200), and the mixed reagents may be recovered in the recovery unit (400).

As shown in FIG. 2a, the recovery unit (400) includes a recovery chamber (411) for extracting the mixed reagents corresponding to the target product. In addition, the recovery unit (400) includes a discharge chamber (412) for discharging mixtures that do not correspond to the target product. For example, if the mixed reagents initially recovered among the mixed reagents that have passed through the mixing unit (200) do not correspond to the target product, they can be collected and processed in the discharge chamber (412), thereby preventing the mixed reagents that do not correspond to the target product from being extracted into the recovery chamber (411).

The recovery chamber (411) and the discharge chamber (412) may be respectively connected to a recovery resistance channel (413) and a discharge resistance channel (414) providing resistance for adjusting pressure heads.

To allow the recovery chamber (411) and the discharge chamber (412) to be coupled to the recovery unit (400), the recovery unit (400) may include a separate recovery unit body (410). In this case, the recovery resistance channel (413) and the discharge resistance channel (414) may be formed at a lower portion of the recovery unit body (410), but are not limited thereto. In the case of a microfluidic chip that does not include the recovery unit body (410), the recovery resistance channel (413) and the discharge resistance channel (414) may be formed in the mixing unit (200).

The recovery unit body (410) may be formed to directly contact an upper surface of the mixing unit (200). A recovery unit auxiliary substrate (420) may be formed to prevent the recovery chamber (411) and the recovery resistance channel (413), as well as the discharge chamber (412) and the discharge resistance channel (414), from being exposed at the lower portion of the recovery unit body (410).

Since the recovery unit auxiliary substrate (420) is installed on the upper portion of the mixing unit (200), a recovery communication hole (425) connecting the recovery chamber (411) and the mixing channel (300) formed in the mixing unit (200) may be formed in the recovery unit auxiliary substrate (420).

The mixing unit (200) is a configuration for mixing two or more different reagents supplied to the injection unit (100) and is formed between the injection unit (100) and the recovery unit (400). As shown in FIGS. 2 and 3, the mixing unit (200) includes a mixing unit substrate (210) in which the mixing channel (300) is formed.

First and second injection holes (213, 214) configured to communicate with the first and second injection chambers (111, 112), respectively, are formed on one side of the mixing unit substrate (210), and a recovery hole (215) configured to communicate with the recovery chamber (411) is formed on the other side of the mixing unit substrate (210).

The mixing channel (300) corresponds to a configuration for mixing two or more different reagents injected through the first and second injection holes (213, 214). In a case where three or more different reagents are injected, injection chambers and injection holes, such as third and fourth injection chambers and third and fourth injection holes, may be additionally formed so as to mix three or more reagents. As an embodiment, the description herein will focus on a case where two types of reagents are injected.

The mixing channel (300) is configured to communicate between the first and second injection holes (213, 214) and the recovery hole (215), which are formed to be spaced apart from each other in a longitudinal direction of the mixing unit substrate (210). The mixing channel (300) includes an inlet channel (310), one or more composite mixing units (320), and a recovery channel (350), which are sequentially formed.

In the present invention, the "longitudinal direction" refers to a direction in which fluids move.

As shown in FIG. 3, the inlet channel (310) includes a first reagent transport channel (311), a second reagent transport channel (312), and a mixed reagent transport channel (313).

The first reagent transport channel (311) is a channel connected to the first injection hole (213) to transport an injected first reagent, and the second reagent transport channel (312) is a channel connected to the second injection hole (214) to transport an injected second reagent.

The mixed reagent transport channel (313) is a single channel formed by connecting the first and second reagent transport channels (311, 312) to each other. The mixed reagent transport channel (313) is a channel where the first and second reagents respectively transported along the first and second reagent transport channels (311, 312) meet for the first time.

At this time, since the reagents transported along the mixed reagent transport channel (313) as well as the first and second reagent transport channels (311, 312) exhibit a laminar flow, the first and second reagents transported together in the mixed reagent transport channel (313) may be transported in a layered state in contact with each other, rather than being uniformly mixed. The first and second reagents transported along the mixed reagent transport channel (313) may be mixed with each other in the composite mixing unit (320).

As shown in FIG. 4, the composite mixing unit (320) includes a first channel (321); one or more first pillars (322) formed inside the first channel (321); a second channel (323); one or more second pillars (324) formed inside the second channel (323); and a third channel (325) connecting the first and second channels (321, 323) to each other.

The composite mixing unit (320) may be formed as a single unit or in plurality, and preferably, a plurality of the composite mixing units (320) may be formed in series. In this case, in the first composite mixing unit (320), the first channel (321) is connected to the mixed reagent transport channel (313).

At this time, a longitudinal direction of the mixed reagent transport channel (313) and a longitudinal direction of the first channel (321) may be formed so as not to be parallel. That is, it is preferable that the mixed reagent transport channel (313) and the first channel (321) are formed in non-parallel directions so that a flow of the mixed reagent transport channel (313) is redirected in the first channel (321) to generate a greater flow.

In one embodiment, the longitudinal direction of the first channel (321) and the longitudinal direction of the mixed reagent transport channel (313) are formed to be perpendicular to each other, allowing for a significant generation of flows through redirection.

As indicated by the ★ in FIG. 4, the flow cross-sectional area of the mixed reagent transport channel (313) may be formed to be equal to or smaller than the sum of the flow cross-sectional areas of both branch channels of the first channel (321) in order to change the flow velocity within the channel and dramatically expand the flow cross-sectional area in the first channel (321). Furthermore, compared to the flow cross-sectional area of the mixed reagent transport channel (313), the flow cross-sectional area of the first channel (321) encountered by the flow entering said first channel (321) is formed to be larger, so that expansion flows can be configured to occur simultaneously.

A first inlet (321a) is formed where the flow enters from the mixed reagent transport channel (313) into the first channel (321). Here, as indicated by the ★ in FIG. 4, the flow cross-sectional area at the first inlet (321a) side of the first channel (321) is formed to be larger than the flow cross-sectional area of the mixed reagent transport channel (313), so that redirection and expansion flows can occur when the reagents are introduced into the first channel (321).

The first pillars (322) may be formed in plurality in a longitudinal direction of the first channel (321) or in a direction different from the longitudinal direction. As shown in FIG. 3, a plurality of the first pillars (322) may be installed in the longitudinal direction of the first channel.

In addition, the first pillars (322) may be formed in plurality also in a width (W1) direction of the first channel (321). In this case, since it is preferable that a length (L1) of the first channel (321) is formed to be longer than the width (W1) of the channel, more first pillars (322) may be formed in the longitudinal direction of the first channel (321).

A first outlet (321b) is formed where the flow exits from the first channel (321) into the third channel (325). In this case, a longitudinal direction of the third channel (325) and a longitudinal direction of the first channel (321) may be formed so as not to be parallel. That is, it is preferable that the first channel (321) and the third channel (325) are formed in non-parallel directions so that a flow of the first channel (321) is redirected in the third channel (325) to generate a greater flow.

In one embodiment, the longitudinal direction of the first channel (321) and the longitudinal direction of the third channel (325) are formed to be perpendicular to each other, allowing for a significant generation of flows through redirection.

The flow cross-sectional area of the third channel (325) may be smaller than the flow cross-sectional area of the first outlet (321b) of the first channel (321), so that a contraction flow can occur when the reagents are introduced from the first channel (321) into the third channel (325).

At this time, it is preferable that the first pillars (322) are not positioned so close to the first outlet (321b) as to prevent the flow cross-sectional area at the first outlet (321b) side of the first channel (321) from being formed larger than the flow cross-sectional area of the third channel (325).

That is, the flow cross-sectional area at the first outlet (321b) side of the first channel (321) is formed to be larger than the flow cross-sectional area of the third channel (325), so that redirection and contraction flows can occur when the reagents are discharged into the third channel (325).

The second channel (323) is connected to the first channel (321) via the third channel (325) such that a flow of the second channel (323) and a flow of the first channel (321) are directed in different directions.

A second inlet (323a) is formed where the flow enters from the third channel (325) into the second channel (323). That is, the second inlet (323a) formed in the second channel (323) is connected to the first outlet (321b) of the first channel (321) via the third channel (325). As shown in FIG. 4, the flow of the third channel (325) may be redirected in the second channel (323).

Additionally, a second outlet (323b) is formed where the flow exits from the second channel (323) into a fourth channel (330). Accordingly, in a plurality of composite mixing units, the second outlet (323b) formed in the second channel (323) may be formed to face the first inlet (321a) of the first channel (321).

In one embodiment, as shown in FIG. 4, the second channel (323) may be disposed to face the first channel (321). The composite mixing unit (320) may be connected such that the first channel (321), the third channel (325), and the second channel (323) form a " 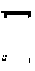 " shape.

Accordingly, in the composite mixing unit (320), reagents are introduced through the first inlet (321a) formed in the first channel (321) and discharged through the second outlet (323b) formed in the second channel (323). As a result, a redirected flow in a " 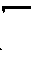 " shape is generated, allowing various flows such as expansion, branching, merging, and contraction flows to occur.

As shown in FIG. 3, similar to the first channel (321), it is preferable that a length (L2) of the second channel (323) is formed to be longer than a width (W2) of the channel for effective mixing of reagents.

The length (L2) and the width (W2) of the second channel (323) may be formed to be the same as the length (L1) and the width (W1) of the first channel (321), respectively, but are not limited thereto.

One or more second pillars (324) may be formed inside the second channel (323), and a flow in which the reagents passing through the second channel (323) are branched and then merged again is generated by the second pillars (324).

At this time, it is preferable that the second pillars (324) are not positioned so close to the second inlet (323a) as to prevent a flow cross-sectional area of the second channel (323) from being formed larger than a flow cross-sectional area of the third channel (325).

That is, even if the second pillars (324) are installed, the flow cross-sectional area at the second inlet (323a) side of the second channel (323) is formed to be larger than the flow cross-sectional area of the third channel (325), so that redirection and expansion flows are generated.

A second outlet (323b) is formed in the second channel (323). The second outlet (323b) may be connected to another composite mixing unit (320) via a fourth channel (330), or may be connected to the recovery unit (400) via a recovery channel (350) for recovering mixed reagents corresponding to a target product.

The fourth channel (330) is a channel connecting two composite mixing units (320), and similar to the third channel (325), it is preferable that the fourth channel (330) is formed such that a flow of the fourth channel (330) is redirected in the longitudinal direction of the first and second channels (321, 323).

In one embodiment, a longitudinal direction of the fourth channel (330) may be formed perpendicular to the longitudinal direction of the first and second channels (321, 323).

The recovery channel (350) is a channel connecting the last composite mixing unit (320) and the recovery unit (400), and similarly to the third and fourth channels (325, 330), it is preferable that the recovery channel (350) is formed such that a flow is redirected from the longitudinal direction of the connected second channel (323).

In one embodiment, a longitudinal direction of the recovery channel (350) may be formed perpendicular to the longitudinal direction of the second channel (323).

It is preferable that the fourth channel (330) and the recovery channel (350) are formed such that a flow cross-sectional area thereof is smaller than a flow cross-sectional area at the second outlet (323b) side of the second channel (323), similar to the third channel (325).

The composite mixing unit (320) allows two or more different reagents to be effectively mixed by generating redirection, expansion, branching, merging, and contraction flows as the reagents pass through the first channel (321), the third channel (325), and the second channel (323). Accordingly, the two or more reagents can be more effectively mixed through the generation of various and repetitive flows.

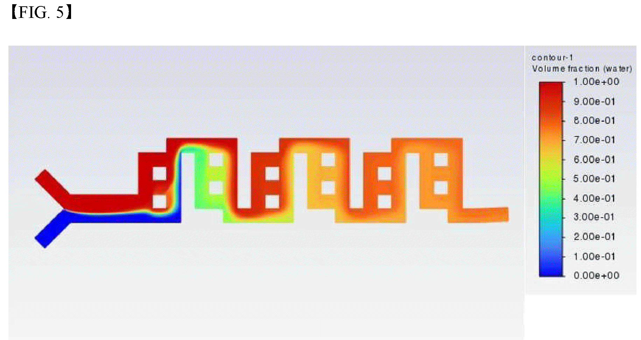

In the microfluidic chip of the present invention having the above configuration and shape, a process in which two or more different reagents are mixed will be described with reference to FIGS. 4 and 5 as follows.

First, the first and second reagents are injected into the first and second injection chambers (111, 112), respectively.

The first and second reagents move along the mixing channel (300) of the mixing unit (200) and are mixed with each other.

In the inlet channel (310), the first and second reagents are transported along the first and second reagent transport channels (311, 312), respectively, and meet for the first time in the mixed reagent transport channel (313).

At this time, since the first and second reagents are transported in the form of a laminar flow, the reagents are not uniformly mixed in the mixed reagent transport channel (313) but may be transported in a state in which they form first and second reagent layers.

The reagents are introduced into the composite mixing unit (320) along the mixed reagent transport channel (313), and various types of flows are generated to produce a reagent mixture.

When reagents are introduced from the mixed reagent transport channel (313) into the first channel (321) of the composite mixing unit (320), reagent mixing is achieved through the generation of redirection and expansion flows.

Additionally, branching and merging flows are generated through the one or more first pillars (322) to achieve reagent mixing. Since redirection, expansion, and contraction flows occur together in the branching and merging flows, the mixing of the reagents can be performed more smoothly.

When the reagents are discharged from the first channel (321) to the third channel (325), redirection and contraction flows are generated to achieve reagent mixing, and when the reagents are introduced from the third channel (325) into the second channel (323), redirection and expansion flows are generated to achieve additional reagent mixing.

While passing through the second pillars (324), the same reagent mixing as when passing through the first pillars (322) is achieved.

The reagents are moved from the second channel (323) through the fourth channel (330) to the next composite mixing unit (320). At this time, when the reagents are discharged from the second channel (323) to the fourth channel (330), redirection and contraction flows are generated.

When reagents pass through the composite mixing unit (320), the reagents sequentially pass through the first channel (321), the third channel (325), and the second channel (323), causing a redirection in a " 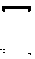 " shape. Since sample mixing is achieved by repeatedly generating various flows such as redirection, expansion, branching, merging, and contraction flows in each part of the composite mixing unit, the samples can be more effectively mixed within a short mixing length of the mixing unit of the microfluidic chip.

FIG. 5 shows reagent mixing simulation results in the mixing unit (200) of the microfluidic chip of the present invention. As shown in FIG. 5, the mixing channel (300) of the present invention can uniformly mix two different types of reagents within a short mixing length in which about three composite mixing units (320) are formed in series, but is not limited thereto. That is, the mixing channel of the present invention may include one or two composite mixing units, and through this, it can be designed to have a short mixing length.

That is, the microfluidic chip of the present invention can more effectively mix reagents within a short mixing length through the mixing channel (300) provided with one or more composite mixing units (320) having a simple structure configured to generate various flows.

**[Description of Reference Numerals]**

| | | | |
|---|---|---|---|
| 10: | Microfluidic chip | | |
| 100: | Injection unit | | |
| 110: | Injection unit body | | |
| 111: | First injection chamber | 112: | Second injection chamber |
| 113: | First injection resistance channel | 114: | Second injection resistance channel |
| 120: | Injection unit auxiliary substrate | | |
| 123: | First injection communication hole | 124: | Second injection communication hole |
| 200: | Mixing unit | | |
| 210: | Mixing unit substrate | | |
| 213: | First injection hole | 214: | Second injection hole |
| 215: | Recovery hole | | |
| 220: | Lower substrate | | |
| 300: | Mixing channel | | |
| 310: | Inlet channel | | |
| 311: | First reagent transport channel | 312: | Second reagent transport channel |
| 313: | Mixed reagent transport channel | | |
| 320: | Composite mixing unit | | |
| 321: | First channel | | |
| 321a: | First inlet | 321b: | First outlet |
| 322: | First pillar | | |
| 323: | Second channel | | |
| 323a: | Second inlet | 323b: | Second outlet |
| 324: | Second pillar | | |
| 325: | Third channel | | |
| 330: | Fourth channel | | |
| 350: | Recovery channel | | |
| 400: | Recovery unit | | |
| 410: | Recovery unit body | | |
| 411: | Recovery chamber | 412: | Discharge chamber |
| 413: | Recovery resistance channel | 414: | Discharge resistance channel |
| 420: | Recovery unit auxiliary substrate | 425: | Recovery communication hole |
| L1: | Length of the first channel | | |
| W1: | Width of the first channel | | |
| L2: | Length of the second channel | | |
| W2: | Width of the second channel | | |

## Claims

1. A microfluidic chip comprising: an injection unit (100); a recovery unit (400); and a mixing unit (200) including a mixing channel (300) connecting the injection unit (100) and the recovery unit (400),
wherein the mixing channel (300) includes an inlet channel (310), a composite mixing unit (320), and a recovery channel (350),
wherein the composite mixing unit (320) includes a first channel (321), a second channel (323), and a third channel (325),
wherein the third channel connects the first channel and the second channel (323),
wherein a longitudinal direction of the first channel and a longitudinal direction of the third channel are not parallel to each other,
wherein the longitudinal direction of the third channel and a longitudinal direction of the second channel are not parallel to each other,
wherein the first channel includes a first pillar, and
wherein the second channel includes a second pillar.

2. The microfluidic chip of claim 1,
wherein the inlet channel includes a mixed reagent transport channel (313),
wherein the mixed reagent transport channel is connected to the first channel, and
wherein a longitudinal direction of the mixed reagent transport channel and the longitudinal direction of the first channel are not parallel to each other.

3. The microfluidic chip of claim 1, wherein the longitudinal direction of the first channel and the longitudinal direction of the third channel are perpendicular to each other.

4. The microfluidic chip of claim 1, wherein the longitudinal direction of the third channel and the longitudinal direction of the second channel are perpendicular to each other.

5. The microfluidic chip of claim 1, wherein the longitudinal direction of the mixed reagent transport channel and the longitudinal direction of the first channel are perpendicular to each other.

6. The microfluidic chip of claim 1, wherein the first channel and the second channel are disposed to face each other.

7. The microfluidic chip of claim 1, wherein a flow cross-sectional area of the third channel is smaller than each of flow cross-sectional areas of the first channel and the second channel.

8. The microfluidic chip of claim 2, wherein a flow cross-sectional area of the mixed reagent transport channel is smaller than the flow cross-sectional area of the first channel.

9. The microfluidic chip of claim 1, wherein the first channel or the second channel has a length (L1) greater than a width (W1).

10. The microfluidic chip of claim 1, wherein the first pillar or the second pillar is provided in plurality along the longitudinal direction of the first channel or the second channel.

11. The microfluidic chip of claim 1, wherein the composite mixing unit is provided in plurality, and the plurality of composite mixing units are arranged in series.

12. The microfluidic chip of claim 11, wherein the composite mixing units adjacent to each other are connected to each other through a fourth channel (330).

13. The microfluidic chip of claim 12, wherein a flow cross-sectional area of the fourth channel is smaller than each of the flow cross-sectional areas of the first channel and the second channel.

14. The microfluidic chip of claim 11, wherein a last composite mixing unit among the plurality of composite mixing units is connected to the recovery unit (400) through a recovery channel (350).

15. The microfluidic chip of claim 1, wherein the first channel, the third channel, and the second channel have a " 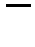 " shape.

16. The microfluidic chip of claim 1, wherein the injection unit includes a first injection chamber (111) and a second injection chamber (112) into which different reagents can be injected, respectively,
wherein the first injection chamber and the second injection chamber are connected to a first injection resistance channel (113) and a second injection resistance channel (114), respectively.

17. The microfluidic chip of claim 16, further comprising an injection chamber and an injection resistance channel.

18. The microfluidic chip of claim 1, wherein the recovery unit includes a recovery chamber (411) and a discharge chamber (412).

19. The microfluidic chip of claim 18, wherein the recovery chamber and the discharge chamber are connected to a recovery resistance channel (413) and a discharge resistance channel (414), respectively.

20. A method of manufacturing a microfluidic chip comprising an injection unit (100), a recovery unit (400), and a mixing unit (200) including a mixing channel (300) connecting the injection unit (100) and the recovery unit (400), the method comprising:
a) a component manufacturing step of manufacturing the injection unit, the mixing unit, and the recovery unit using separate molds, respectively;
b) an alignment step of aligning the injection unit and the recovery unit at coupling positions on the mixing unit; and
c) a coupling step of coupling the injection unit and the recovery unit aligned on the mixing unit by applying pressure.
